(19) Europäisches Patentamt
European Patent Office
Office européen des brevets

(11) Publication number: **0 069 937**
**B1**

(12) **EUROPEAN PATENT SPECIFICATION**

(45) Date of publication of patent specification: **29.06.88**

(51) Int. Cl.⁴: **C 08 J 5/12,** C 08 L 23/02

(21) Application number: **82105923.5**

(22) Date of filing: **02.07.82**

(54) **Mica-reinforced polyolefinic compositions.**

(30) Priority: **03.07.81 IT 2273281**

(43) Date of publication of application:
**19.01.83 Bulletin 83/03**

(45) Publication of the grant of the patent:
**29.06.88 Bulletin 88/26**

(84) Designated Contracting States:
**BE DE FR GB NL**

(56) References cited:
**EP-A-0 008 703**
**EP-A-0 036 097**
**FR-E- 87 183**
**US-A-3 416 990**
**US-A-3 793 288**

**The file contains technical information submitted after the application was filed and not included in this specification**

(73) Proprietor: **Montedison S.p.A.**
**Patents & Licensing Dept. Foro Buonaparte, 31**
**P.O. Box 10528**
**I-20121 Milan (IT)**

(72) Inventor: **Marzola, Roberto**
**34, via Mario Azzi**
**Ferrara (IT)**
Inventor: **Garagnani, Enea, Dr.**
**9, via Jolanda Bonfieni**
**Ferrara (IT)**
Inventor: **Moro, Alessandro**
**1, via Don P. Mazzolari**
**Occhiobello Rovigo (IT)**

(74) Representative: **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

**EP 0 069 937 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

FR—E—87 183 and EP—A—0 008 703 disclose the use of a condensation product of two molecules of maleic acid or maleic anhydride with an aliphatic, aromatic or heterocyclic diamine as coupling agent capable of promoting the adhesion of reinforcing mineral fillers to polyolefins. US—A—3 793 288 describes the treatment of thermoplastic polymers with an organo-functional silane coupling agent and a resinous copolymer of ethylene and acrylic and/or methacrylic acid so as to enhance their bonding to inorganic oxide substrates.

This invention relates to polyolefins reinforced with micas, endowed with improved properties of mechanical resistance.

In particular this invention relates to compositions based on olefinic polymers containing micas having a different shape ratio, as well as to additives which promote the adhesion of the micas to the polymer.

The micas utilized for the purposes of the present invention are preferably of the "muscovite" or "flogotite" type and possess a shape ratio (or ratio between diameter and thickness) ranging from 20 to 400, and preferably from 100 to 200.

The additives employed to promote the adhesion of the micas to the polymer according to the present invention belong to the class of maleamic acid derivates and have according to one embodiment the general formula:

(I) 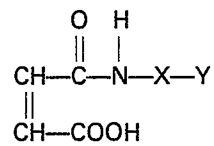

wherein:

Y is a silane group of formula

$$—Si(Z)_3$$

X may be a radical of formula

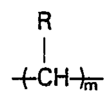

or an aromatic, cycloaliphatic or heterocyclic divalent radical, whereby R=H or an alkyl radical containing 1 to 18 carbon atoms,

Z= a hydrolysable alkoxy group containing from 1 to 6 carbon atoms, and preferably a methoxy or ethoxy group, or a halogen atom and

m is an integer ranging from 1 to 3, extremes included.

Belonging to the compounds utilizable for the preparation of the additives employed according to the present invention are the monomaleamic acids and the bis-maleamic acids, such as for example N,N'-hexamethylene-bis-maleamic acid, or the N,N'-ethylene-, or N,N'-trimethylene-, N,N'-piperazine-, N,N'-m-phenylene-, N,N'-3,3'-(trans-stilben-5,5'-sodium sulphonate)-, N,N'-4,4'-(diphenyl-ether)-, N,N'-4,4'-(diphenyl-methane)-, N,N'-2,5-dimethylene-norbornane-bis-maleamic acid and, finally, N,N'-isophorone-bis-maleamic acid. It is known how to prepare such acids, and some methods of preparation are described in particular in Italian patent application No. 27664 A/78 in the name of the Applicant. (Italian Patent Publication No. 27664 A/78).

Belonging to the additives employed according to the present invention are the products of the reaction between the maleamic acids and organofunctional silanes of general formula

(III) $$X'—R^3—Si(Z)_3$$

wherein Z and $R^3$ have the meaning defined hereinbefore and X' represents an amininic, epoxy, mercaptane, vinyl or halogen group, which are functional groups capable of reacting with the carboxylic groups of the maleamic acids.

To the additives employed according to the invention belong in particular the products of the reaction between maleic anhydride, or derivatives thereof such as for example maleic acid and the halides or esters thereof, and aminosilanes of formula

(IV) $$H_2N—R^3—Si(Z)_3$$

wherein $R^3$ and Z have the meaning defined hereinbefore.

The compositions of the present invention comprise from 30 to 90% by weight of a polyolefin, from 70 to 10% by weight of mica and from 0.01 to 7% by weight, referred to the mixture of polyolefin and mica, of at least a compound according to formula (I).

Accordingly the present invention is concerned with polyolefinic compositions including from 30% to 90% by weight of an olefinic homopolymer or copolymer, from 70% to 10% by weight of mica and from 0.01% to 7% by weight, referred to the weight of the mixture of polymer and mica, of at least a compound having the general formula:

(I) 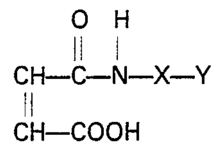

wherein:

Y is a silane group·of formula

$$—Si(Z)_3$$

X may be a radical of formula

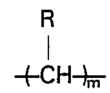

or an aromatic, cycloaliphatic or heterocyclic divalent radical, whereby R=H or an alkyl radical containing 1 to 18 carbon atoms,

Z=a hydrolysable alkoxy group containing from 1 to 6 carbon atoms, and preferably a methoxy or ethoxy group, or a halogen atom and

m is an integer ranging from 1 to 3, extremes included.

According to a further embodiment the present invention is concerned with a polyolefinic composition of the above kind characterised in that it contains at least a compound prepared by reaction of maleic anhydride or acid or a bis-maleamic acid of the general formula

(II) 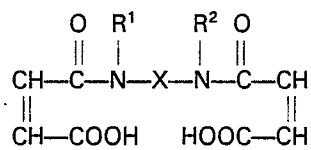

in which X is defined as above and $R^1$, $R^2$=H, or may be together a radical of the type

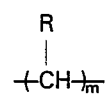

wherein R and m are defined as in Claim 1, or of N,N' - hexamethylene - bis - maleamic acid or N,N' - 3,3' - (trans - stilben - 5,5' - sodium sulphonate) - bis - maleamic acid with compounds of formula

(III) $$X'—R^3—Si(Z)_3$$

wherein

$R^3$ may be an aliphatic divalent radical containing 1 to 18 carbon atoms, optionally containing a hereroatom, or a cycloaliphatic or aromatic divalent radical, having one or more nuclei, optionally containing a heteroatom or a heterocyclic radical,

Z is defined as in Claim 1 and

X' is an epoxy, mercaptane, vinyl, aminic or halogen group, and when X' is an aminic group, $R^1=R^2$=H.

In a special composition of the present invention the additive is obtained by reaction between γ-aminopropyltriethoxysilane and N,N'-isophorone-bis-maleamic acid.

Such compositions can be prepared by mixing the polymer with the mica and the additive in any possible orders, and by successively bringing the mixture to a temperature at least equal to the polymer melting temperature, by operating in proper mixers and according to the technologies usually employed for preparing the mixes of thermoplastic polymers.

Instead of the additives as such, it is possible to mix, with the mica and the polymer, the precursor compounds of such additives, which successively, during the hot mixing, molding, extrusion steps, react at least partially with one another to originate the corresponding additive.

It is possible, for example, to mix with the mica and the polyolefin a silane derivative comprised in formula (I), or, optionally mixed with each other, the maleic anhydride (or a derivative thereof) and a silane of formula (IV) a silane of formula (III) and an amine capable of providing, in the successive hot mixing step, or in the molding or extrusion steps, the corresponding silane derivative. Preferred amines are generally

the cycloaliphatic amines containing more than 6 carbon atoms, such as for example isophorone-diamine and bis-aminomethyl-norbornane. The addition of the various components, including the abovesaid precursors, to obtain the final composition can be accomplished in any succession, provided the final composition has a homogeneous structure.

As polyolefins it is possible to use polyethylene, polypropylene, the statistic or block ethylene/propylene copolymers, 4-methyl-pentene-1, polybutene-1.

The following examples are given to illustrate the present invention, without being however a limitation thereof.

Examples 1—3 (comparative tests)

There were prepared three mixtures, each consisting of 1200 g of polypropylene in flakes (M.I.=12) with 800 g of mica of types (a), (b) and (c) respectively, the characteristics of which are recorded on Table I.

Each mixture was additioned with 0.1% by weight, referred to the polymer weight, of tetra[3-(3,5-di-t.butyl-4-hydroxyphenyl)-propionate] of pentaerythritol and with 0.1% by weight of 2,6-di-t.butyl-p.cresol (antioxidants). The mixtures were extruded at 250°C in a Pasquetti two-screw extruder. From such extruded, test pieces were prepared for the characterization, by using an injection press type V 160/72 available from GBF, Bresso (Italy), operating under the following conditions:

| | |
|---|---|
| temperature of the press body and head | 250°C |
| temperature of the mold | 25°C |
| injection time for test pieces for tensile tests | 20 seconds |
| total cycle for test pieces for tensile tests | 70 seconds |
| injection time for test pieces for bending, impact and HDT tests | 80 seconds |
| total cycle for test pieces for bending, impact and HDT tests | 100 seconds |

The characteristics observed on such test pieces are indicated in Table II.

Examples 4—6

Examples 1—3 were repeated, except that the micas were pretreated (mixed) in a mixer for powders with 18% by weight (calculated on the mica weight) of a maleamic silane of formula:

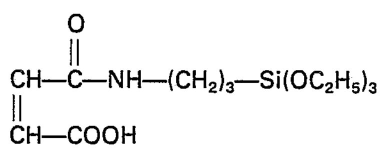

prepared by reacting maleic anhydride and γ-aminopropyltriethoxysilane at about 40°C, in a nitrogen atmosphere, in a molar ratio of 1/1. The characteristics of the compositions are recorded on Table II.

Example 7

By operating as in Examples 1—3, two mixtures were prepared, each consisting of 1200 g of the same polypropylene with 800 g of mica, type (b), which had undergone a pretreatment (addition) in a mixer for powders at first with 0.4% by weight, referred to the mica weight, of γ-aminopropyl-triethoxysilane and successively with 0.6% by weight of N,N'-isophorone-bis-maleamic acid. The characteristics of the test pieces obtained by extrusion from such mixture are recorded on Table II.

Example 8

It was operated as in Example 7, except that the mica had been pretreated first with 0.7% by weight, referred on the mica weight, of γ-aminopropyl-triethoxysilane and successively with 0.3% by weight of maleic anhydride. The characteristics of the extruded mixes are recorded on Table II.

TABLE I

| Particle size distribution | Mica type (a) Micromik 200 | (b) Mica dry 40/80 mesh | (c) Mica water-ground |
|---|---|---|---|
| >420 µm % | — | 16.2 | — |
| 420—350 µm % | — | 11.3 | — |
| 350—297 µm % | 1.6 | 11.1 | — |
| 297—250 µm % | 1.7 | 7.6 | 0.1 |
| 250—177 µm % | 6.8 | 17.1 | 0.2 |
| 177—105 µm % | 17.6 | 18.4 | 0.8 |
| 105—53 µm % | 46.0 | 11.0 | 32.7 |
| 53—37 µm % | 12.4 | 7.3 | 38.0 |
| <37 µm % | 13.9 | — | 28.2 |
| Tamped apparent density | 0.913 | 0.740 | 0.426 |
| Shape ratio | 25 | 54 | 170 |

TABLE II

| | Examples 1 mica (a) | 2 mica (b) | 3 mica (c) | 4 mica (a) | 5 mica (b) | 6 mica (c) | 7 mica (b) | 8 mica (b) |
|---|---|---|---|---|---|---|---|---|
| Modulus of elasticity to flexure N/mm$^2$ (ASTM 790) | 4214 | 5194 | 7056 | 4508 | 6076 | 7546 | 5880 | 5978 |
| Ultimate tensile stress N/mm$^2$ (ASTM 38) | 28.4 | 30.2 | 36.5 | 32.3 | 41.9 | 41.9 | 41.2 | 41.7 |
| Elongation at break % (ASTM 638) | 9 | 7 | 5 | 7 | 4 | 4 | 4 | 4 |
| Izod resiliency determined by notched-bar test (ASTM 256) | 3.4 | 3 | 3 | 3.2 | 3 | 2.8 | 3.2 | 3.1 |
| H D T with 18.5 kg °C (ASTM 648) | 80 | 81 | 107 | 98 | 99 | 116 | 98 | 99 |
| Creep under bending at 80°C for 8 hours, with 100 kg, determined in the middle of the tensile test specimen (distance between the supports=4 cm) | 1.75 | 1.57 | 0.94 | 1.34 | 0.98 | 0.94 | 0.99 | 0.99 |
| Melt index of the composition (ASTM 1238) | 6.3 | 5.3 | 3.4 | 6.2 | 3.6 | 3.2 | 3.7 | 3.6 |

## Claims

1. Polyolefinic compositions including from 30% to 90% by weight of an olefinic homopolymer or copolymer, from 70% to 10% by weight of mica and from 0.01% to 7% by weight, referred to the weight of the mixture of polymer and mica, of at least a compound having the general formula:

(I) 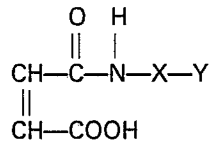

wherein:

Y is a silane group of formula

$$—Si(Z)_3$$

X may be a radical of formula

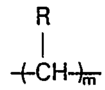

or an aromatic, cycloaliphatic or heterocyclic divalent radical, whereby R=H or an alkyl radical containing 1 to 18 carbon atoms,

Z=a hydrolysable alkoxy group containing from 1 to 6 carbon atoms, and preferably a methoxy or ethoxy group, or a halogen atom and

m is an integer ranging from 1 to 3, extremes included.

2. A polyolefinic composition according to Claim 1 characterised in that it contains at least a compound prepared by reaction of maleic anhydride or acid or a bis-maleamic acid of the general formula

(II) 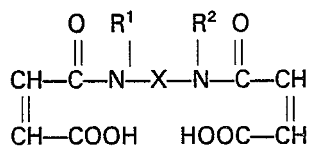

in which X is defined as in Claim 1 and $R^1$, $R^2$=H, or may be together a radical of the type

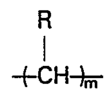

wherein R and m are defined as in Claim 1, or of N,N′-hexamethylene-bismaleamic acid or N,N′-3,3′-(trans-stilben-5,5′-sodium sulphonate)-bis-maleamic acid with compounds of formula

(III) $$X'—R^3—Si(Z)_3$$

wherein

$R^3$ may be an aliphatic divalent radical containing 1 to 18 carbon atoms, optionally containing a heteroatom, or a cycloaliphatic or aromatic divalent radical, having one or more nuclei, optionally containing a heteroatom or a heterocyclic radical,

Z is defined as in Claim 1 and

X′ is an epoxy, mercaptane, vinyl, aminic or halogen group, and when X′ is an aminic group, $R^1=R^2$=H.

3. The composition according to Claim 2, in which the compound that it contains, is obtained by reaction between γ-aminopropyltriethoxysilane and N,N′-isophorone-bis-maleamic acid.

## Patentansprüche

1. Polyolefinzusammensetzungen, enthaltend 30 bis 90 Gew.-% eines Olefinhomopolymeren oder -copolymeren, 70 bis 10 Gew.-% Glimmer und 0,01 bis 7 Gew.-%, bezogen auf das Gewicht der Mischung des Polymeren und des Glimmers, zumindest einer Verbindung der allgemeinen Formel:

(I) 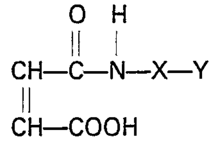

worin:

Y für eine Silangruppe der Formel

$$-Si(Z)_3$$

steht,

X ein Rest der Formel

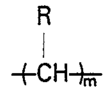

oder ein aromatischer, cycloaliphatischer oder heterocyclischer zweiwertiger Rest sein kann, wobei R=H oder ein Alkylrest mit 1 bis 18 Kohlenstoffatomen,

Z=eine hydrolysierbare Alkoxygruppe mit 1 bis 6 Kohlenstoffatomen und vorzugsweise eine Methoxy- oder Ethoxygruppe oder ein Halogenatom und

m für eine ganze Zahl im Bereich von 1 bis 3 einschließlich der Grenzwerte steht.

2. Polyolefinzusammensetzung gemäß Anspruch 1, dadurch gekennzeichnet, daß sie zumindest eine Verbindung enthält, hergestellt durch Umsetzung von Maleinsäureanhydrid oder -säure oder einer Bis-maleamidsäure der allgemeinen Formel

(II) 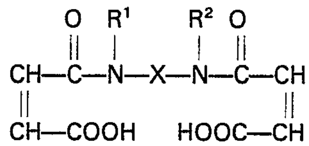

worin X die in Anspruch 1 angegebene Bedeutung besitzt, $R^1$, $R^2$=H oder gemeinsam einen Rest des Typs

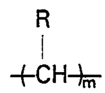

darstellen können, worin R und m wie in Anspruch 1 definiert sind, oder von N,N'-Hexamethylen-bis-maleamidsäure oder N,N'-3,3'-(trans-Stilben-5,5'-natriumsulfonat)-bis-maleamidsäure mit Verbindungen de Formel

(III) $$X'-R^3-Si(Z)_3$$

worin

$R^3$ ein aliphatischer zweiwertiger Rest mit 1 bis 18 Kohlenstoffatomen, der gegebenenfalls ein Heteroatom enthält, oder ein cycloaliphatischer oder aromatischer zweiwertiger Rest mit einem oder mehreren Ringen, der gegebenenfalls ein Heteroatom oder einen heterocyclischen Rest enthält, sein kann,

Z wei in Anspruch 1 definiert ist und

X' eine Epoxy-, Mercaptan, Vinyl-, Amin- oder Halogengruppe darstellt und wenn X' eine Amingruppe bedeutet, $R^1=R^2=H$.

3. Zusammensetzung gemäß Anspruch 2, in der die Verbindung, die sie enthält, erhalten wird durch Umsetzung von γ-Aminopropyltriethoxysilan mit N,N'-Isophoron-bis-maleamidsäure.

**Revendications**

1. Compositions polyoléfiniques comprenant de 30% à 90% en poids d'un homopolymère ou copolymère oléfinique, de 70% à 10% en poids de mica et de 0,01% à 7% en poids, par rapport au poids du mélange de polymère et de mica, d'au moins un dérivé de formule générale:

(I) 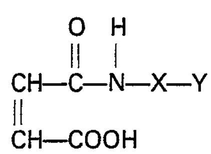

dans laquelle:

Y représente un groupe silane de formule:

$$—Si(Z)_3$$

X peut représenter un radical de formule

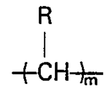

ou un radical aromatique, cycloaliphatique ou hétérocyclique divalent, dans lequel R=H ou un radical alkyle renfermant de 1 à 18 atomes de carbone;

Z=un groupe alkoxy hydrolysable renfermant de 1 à 6 atomes de carbone de préférence un groupe méthoxy ou éthoxy, ou un atome d'halogène; et

m est un nombre entier compris entre 1 et 3, bornes comprises.

2. Une composition oléfinique selon la revendication 1, caractérisée en ce qu'elle contient au moins un dérivé préparé par réaction d'anhydride ou d'acide maléique ou d'un acide bis-maléamique de formule générale:

(II)

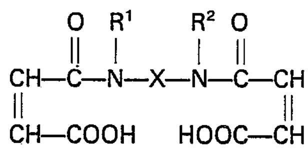

dans laquelle:

X est tel que défini dans la revendication 1; et

$R^1$, $R^2$=H, ou peuvent représenter ensemble un radical du type

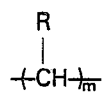

dans laquelle R et m sont tels que définis dans la revendication 1, ou d'acide N,N'-hexaméthylène-bis-maléamique, ou d'acide N,N'-3,3'-(trans-stilbène-5,5'-sodium sulfonate)-bis-maléamique avec des dérivés de formule:

$$X'—R^3—Si(Z)_3 \quad (III)$$

dans laquelle:

$R^3$ peut présenter un radical aliphatique divalent renfermant de 1 à 18 atomes de carbone, contenant éventuellement un hétéro-atome ou un radical divalent cycloaliphatique ou aromatique renfermant un ou plusieurs noyaux, contenant éventuellement un hétéro-atome ou un radical hétérocyclique;

Z est tel que défini dans la revendication 1; et

X' représente un groupe époxy, mercaptan, vinyle, aminique ou halogène et, lorsque X' représente un groupe aminique, $R^1$=$R^2$=H.

3. La composition selon la revendication 2, dans laquelle le dérivé qu'elle contient est obtenu par réaction entre le γ-aminopropyltriéthoxysilane et l'acide N,N'-isophorone-bis-maléamique.